# EUROPEAN PATENT APPLICATION

(11) **EP 1 803 666 A1**
(43) Date of publication of application: **04.07.2007**
(21) Application number: 06022941.6
(22) Date of filing: 03.11.2006
(51) Int. Cl.: B65G 65/42, B28B 15/00, B28B 13/02

(54) **Transporting apparatus and method for manufacturing honeycomb structured body**

(30) Priority: 27.12.2005 WO PCT/JP2005/023955
(71) Applicant: IBIDEN CO., LTD., Ogaki-shi Gifu 503-8604 (JP)
(72) Inventor: Yamada, Hiroshi c/o Ibiden Co. Ltd., Ibi-gun Gifu 501-0695 (JP); Sumiya, Eiji c/o Ibiden Co. Ltd., Ibi-gun Gifu 501-0695 (JP); Tajima, Kosei c/o Ibiden Co. Ltd., Ibi-gun Gifu 501-0695 (JP)
(74) Representative: HOFFMANN EITLE

(57) **Abstract**

An object of the present invention is to provide a transporting apparatus (50) capable of temporarily storing a wet mixture, and the transporting apparatus (50) of the present invention comprises a storage unit (51) for temporarily storing the wet mixture and a transporting unit (52) equipped with a conveyor (55a,55b) for transporting the wet mixture.

## Description

### TECHNICAL FIELD

The present invention relates to a transporting apparatus and a method for manufacturing a honeycomb structured body.

### BACKGROUND ART

In recent years, particulates such as soot contained in exhaust gases that are discharged from internal combustion engines of vehicles, such as buses and trucks, and construction machines, have raised serious problems as contaminants harmful to the environment and the human body.
For this reason, various honeycomb filters using honeycomb structural bodies comprising porous ceramics, which serve as filters that capture particulates in exhaust gases to purify the exhaust gases, have been proposed.

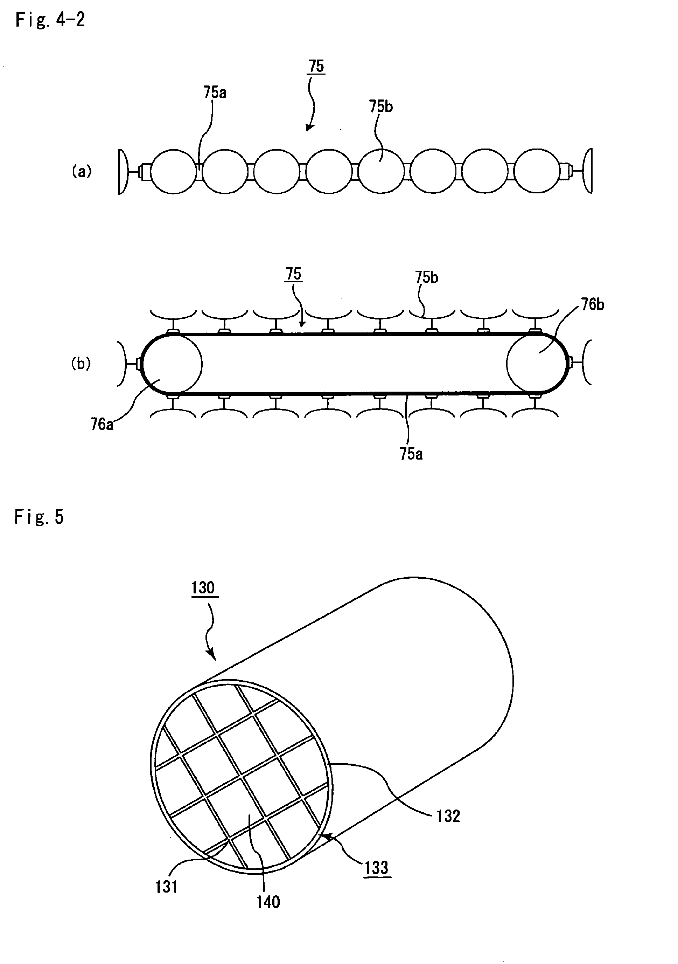

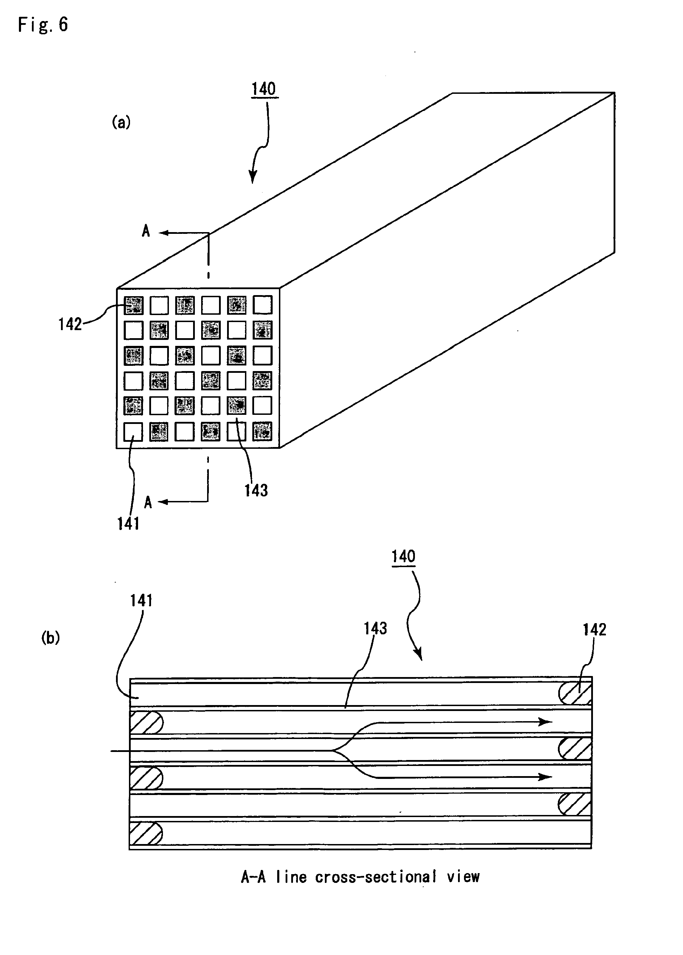

Fig. 5 is a perspective view that schematically shows one example of a ceramic filter of this kind, Fig. 6 (a) is a perspective view that schematically shows a honeycomb fired body constituting the ceramic filter, and Fig. 6 (b) is a cross-sectional view taken along line A-A of Fig. 6(a).

In a ceramic filter 130, a plurality of honeycomb fired bodies 140 shown in Fig. 6 are bonded to one another by interposing a sealing material layer (adhesive layers) 131 to form a ceramic block 133, and a sealing material layer (coat layer) 132 is further formed on the outer circumference of this ceramic block 133.
Moreover, as shown in Fig. 6, a honeycomb fired body 140 has a number of cells 141 longitudinally placed in parallel with one another, so that each cell wall 143 that separates the cells 141 is allowed to function as a filter.

In other words, as shown in Fig. 6(b), each of the cells 141, formed in the honeycomb fired body 140, is sealed with a plug material layer 142 at either one of ends on its exhaust-gas inlet side and outlet side so that exhaust gases that have entered one cell 141 are discharged from another cell 141 after having surely passed through each cell wall 143 that separates the cells 141; thus, when exhaust gases pass through the cell wall 143, particulates are captured by the cell wall 143 so that the exhaust gases are purified.

Conventionally, upon manufacturing such a ceramic filter 130, first, a ceramic powder, a binder, a dispersant solution and the like are mixed to prepare a wet mixture. Then, the wet mixture is continuously extrusion-molded through a die, and the extruded molded body is cut into a predetermined length so that a rectangular pillar-shaped honeycomb molded body is manufactured.

Next, the resulting honeycomb molded body is dried by utilizing a microwave dryer or a hot-air dryer, and after predetermined cells have been sealed so that either one of ends of each cell is sealed by the plug material layer, a degreasing process and a firing process are carried out on the resulting honeycomb molded body to manufacture a honeycomb fired body.

Thereafter, a sealing material paste is applied to the side faces of the honeycomb fired body, and the honeycomb fired bodies are mutually bonded so that an aggregate body of the honeycomb fired bodies, in which a number of the honeycomb fired bodies are bound to one another by interposing the sealing material layer (adhesive layers), is manufactured. Next, the resulting aggregate body of the honeycomb fired bodies is cut and machined into a predetermined shape, such as a cylindrical shape and a cylindroid shape, by using a cutting tool or the like so that a ceramic block is formed, and lastly, a sealing material paste is applied onto the periphery of the ceramic block to form a sealing material layer (coat layer); thus, the manufacturing process for the ceramic filter is completed.

In the manufacturing method of this kind, after a wet mixture has been prepared, it is necessary to transport the wet mixture to an extrusion-molding machine at the next process through a transporting apparatus.
Examples of the transporting apparatus used for transporting the wet mixture include, for example, those disclosed in Patent Documents 1 and 2.

Patent Document 1: JP-A 2002-255353
Patent Document 2: JP-A 5-131432

### DISCLOSURE OF THE INVENTION PROBLEMS TO BE SOLVED BY THE INVENTION

However, the main purpose of the conventional transporting apparatus is only to continuously supply a material mixture; therefore, in the case where the succeeding process after transporting the material mixture by the transporting apparatus is stopped due to any trouble, since the supply of the material needs to be stopped, the transporting apparatus also needs to be stopped, and in addition, the preceding processes before the transporting apparatus, that is, the process of preparing the material mixture and the like, also need to be stopped; consequently, following the stoppage of one process, all the processes need to be stopped, resulting in degradation in the operation efficiency.
Moreover, in the case where the supply of the wet mixture to the transporting apparatus is once stopped, immediately after resuming the operation of the extrusion-molding machine again, the molding machine sometimes has an insufficient supply of the wet mixture and, in such a case, the extruded molded body may become a defective product.

### MEANS FOR SOLVING THE PROBLEMS

In order to solve the above-mentionedproblems, the present inventors have intensively studied, and have devised a transporting apparatus in which, even in the event of any trouble in the succeeding processes after the transporting process of a wet mixture, it is not necessary to stop the operation in the preceding process before the transportation of the wet mixture so that the shortage of the wet mixture in the molding machine can be prevented, and a method for manufacturing a honeycomb structured body using such a transporting apparatus.

In other words, the transporting apparatus of the present invention comprises a storage unit for temporarily storing a wet mixture and a transporting unit equipped with a conveyor for transporting the wet mixture.

Desirably, the transporting apparatus further comprises a distribution mechanism for distributing the wet mixture to different transporting ends, and the distribution mechanism is desirably installed in the storage unit and/or the transporting unit.
Moreover, the transporting unit is desirably constituted by a casing and a belt conveyor installed in the casing.

A method for manufacturing a honeycomb structured body in accordance with the present invention comprises: carrying out a transporting process in which a wet mixture containing inorganic powders that have been wet-mixed is transported to an apparatus used in an extrusion-molding process, followed by manufacturing a pillar-shaped honeycomb molded body having a number of cells longitudinally placed in parallel with one another with a cell wall therebetween through extrusion molding, and firing the honeycomb molded body to manufacture a honeycomb structured body comprising a honeycomb fired body. In this method, a transporting apparatus, which comprises a storage unit for temporarily storing the wet mixture and a transporting unit equipped with a conveyor for transporting the wet mixture, is utilized in the transporting process so that the wet mixture is transported to an extrusion-molding machine.

In the above-mentioned method for manufacturing a honeycomb structured body, the transporting apparatus desirably comprises a distribution mechanism for distributing the wet mixture to apparatuses used in different extrusion-molding processes, and the distribution mechanism is desirably installed in the storage unit and/or the transporting unit.

In the above-mentioned method for manufacturing a honeycomb structured body, the transporting unit is desirably constituted by a casing and a belt conveyor installed in the casing.

### EFFECTS OF THE INVENTION

In the transporting apparatus of the present invention, even in the case where the operation is stopped due to any trouble or the like in a process after the transporting apparatus to cause a failure in continuously supplying the wet mixture, since a storage unit capable of temporarily storing the wet mixture is provided there, it is not necessary to stop processes before the transporting apparatus (process for preparing the wet mixture, and the like), and the processes are continuously operated so that it is possible to prevent degradation of the operation efficiency.
Moreover, since the transporting apparatus of the present invention is equipped with the storage unit, a required amount of the wet mixture can be always transported to an apparatus used in the succeeding process, and therefore, when the molding machine is stopped temporarily and then re-operated, a molded body having a desired shape can be immediately supplied to the succeeding process.

In the method for manufacturing a honeycomb structured body of the present invention, even in the case where the operation is stopped due to any trouble or the like in a process after the process of transporting the wet mixture, since a transporting apparatus equipped with a storage unit capable of temporarily storing the wet mixture is utilized as the transporting apparatus, it is not necessary to stop processes before the transporting apparatus (process for preparing the wet mixture, and the like) , and the processes can be continuously operated and therefore it is possible to prevent degradation of the operation efficiency.
Moreover, since the transporting apparatus is equipped with the storage unit, a required amount of the wet mixture can be always transported to an extrusion-molding machine in the succeeding process; therefore, when the extrusion-molding machine is stopped temporarily and then re-operated, a molded body having a desired shape can be immediately supplied.

### BEST MODE FOR CARRYING OUT THE INVENTION

First, the following description will discuss a transporting apparatus in accordance with the present invention.
The transporting apparatus of the present invention comprises a storage unit used for temporarily storing a wet mixture and a transporting unit equipped with a conveyor for transporting the wet mixture.

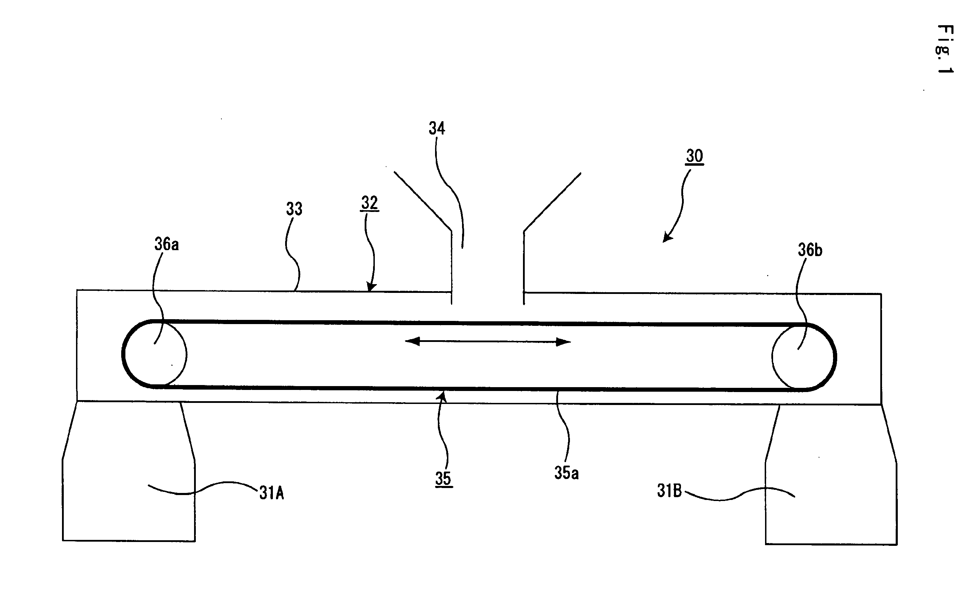

Fig. 1 is a cross-sectional view that schematically shows one example of the transporting apparatus of the present invention.
This transporting apparatus 30 is constituted by storage units 31A and 31B used for temporarily storing a wet mixture, a casing 33 having a supplying port 34 through which the wet mixture is charged, and a transporting unit 32 that is constituted by a belt conveyor 35 and is used for transporting the wet mixture.
In the transporting apparatus 30, when a wet mixture, prepared in a wet mixing machine (not shown), is charged into the transporting unit 32 through the supplying port 34, the supplied wet mixture is accumulated on the belt conveyor 35 that constitutes the transporting unit 32.

The belt conveyor 35, which is constituted by a conveyor belt 35a and rollers 36a and 36b, transports a wet mixture (not shown) accumulated on the belt conveyor 35, toward the storage unit 31A continuously or intermittently, and charges the mixture into the storage unit 31A.
The storage unit 31A has a discharging port that can be opened and closed at its bottom face, and the storage unit 31A can temporarily store a fixed amount of the wet mixture, and can also charge the wet mixture, while controlling the amount thereof to a fixed amount per unit time, through the discharging port into the next process, for example, a process for manufacturing a molded body by using an extrusion-molding machine.

Moreover, in the transporting apparatus 30, by reversing the rotational direction of the rollers 36a and 36b, the wet mixture accumulated on the belt conveyor 35 can be transported to the storage unit 31B continuously or intermittently so that the wet mixture can be charged into the storage unit 31B.
In the same manner as the storage unit 31A, the storage unit 31B, which also has a discharging port that can be opened and closed at its bottom face, temporarily stores a fixed amount of the wet mixture, and also charges the wet mixture into the next process, while controlling the amount of the wet mixture to a fixed amount per unit time.
Accordingly, in the transporting apparatus 30, the transporting unit is provided with a distributing mechanism.
Here, in the case where the transporting apparatus 30 supplies the wet mixture into two separate extrusion-molding machines, the amount to be respectively delivered can be selected by adjusting the speed of the belt conveyor or the respective driving time period or the like of the forward and reverse rotations. Here, as to what amount of the wet mixture is transported to which storage unit, the selection can be made on demand.

In this manner, in the transporting apparatus 30, since the storage units 31A and 31B can function as buffers, the wet mixing machine (not shown) in the process prior to the transporting apparatus 30 is allowed to carry out the mixing, and the wet mixture is continuously charged into the transporting apparatus 30; thus, even in the case where the operation of any process in the next process and thereafter is stopped, the state as it is can be maintained if only for a short period of time.
In contrast, in the case where no wet mixture is charged into the transporting apparatus 30 due to a stoppage of the mixing operation in the wet mixing machine, so that the wet mixture needs to be supplied to the next process, also, the wet mixture can be continuously supplied to the extrusion-molding machine.
Moreover, in the transporting apparatus 30, the wet mixture can be temporarily stored in the storage units 31A and 31B.

The transporting apparatus 30 is provided with a casing 33 having a lid, which covers the entire periphery of the belt conveyor 35 so as to produce a tightly sealed state in which the storage units 31A and 31B are included. With this structure, the transporting and storing processes can be carried out, with the moisture content of the wet mixture being maintained in a fixed state.
Here, in the transporting apparatus of the present invention, the transporting unit is not necessarily required to have a casing; however, from the viewpoint of quality maintenance of the wet mixture, the transporting unit is desirably provided with a casing, and in particular, from the viewpoint of achieving the above-mentioned effects, it is more desirably provided with a casing having a lid.
Therefore, as shown in Fig. 1, the transporting unit desirably comprises a casing and a belt conveyor placed inside the casing.
Here, in the transporting apparatus of the present invention, the casing having a lid of course includes a casing constituted by a box-shaped member having a lid, as well as a casing that has been preliminarily formed into a tube shape.

Moreover, in the transporting apparatus 30, the moisture content of the wet mixture is desirably controlled so that the moisture content variation of the wet mixture is set to 1% by weight or less, and by using the casing with a lid, the moisture content can be controlled in this manner. This arrangement is desirable, because the rate of occurrence of defective products in the post process becomes smaller as the moisture content variation of the wet mixture is reduced.

The transporting apparatus 30 shown in Fig. 1 is a transporting apparatus provided with a distribution mechanism, and the distribution mechanism is installed in the transporting unit.
However, the structure of the transporting apparatus of the present invention is not intended to be limited by this structure, and may have, for example, the following structure.

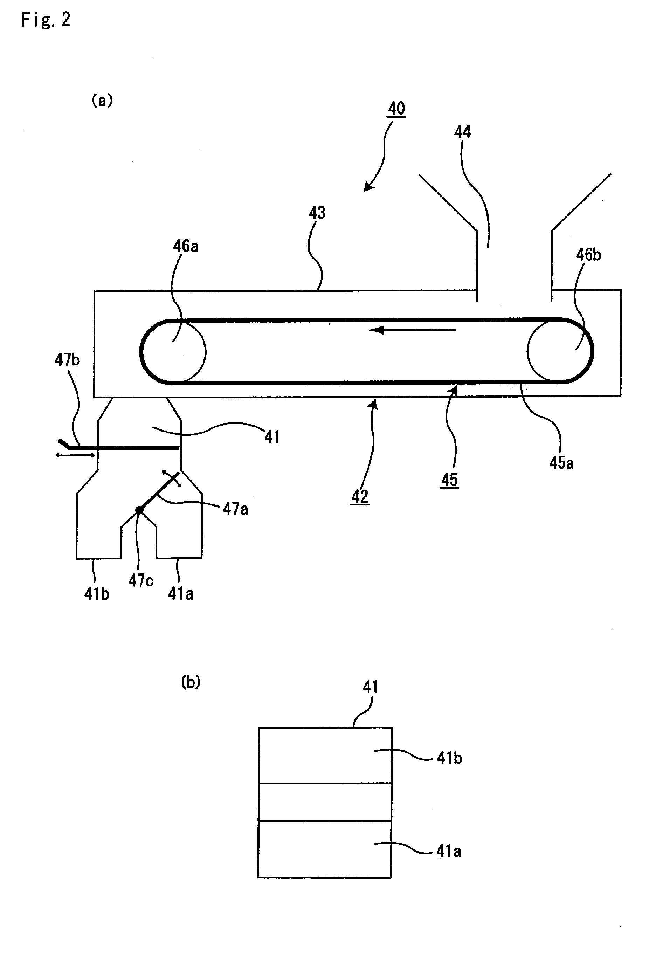

Fig. 2(a) is a cross-sectional view that schematically shows another example of the transporting apparatus of the present invention, and Fig. 2 (b) is a bottom face view of a storage unit that constitutes the transporting apparatus shown in Fig. 2 (a).

A transporting apparatus 40 shown in Fig. 2 is a transporting apparatus provided with a distribution mechanism, and in this transporting apparatus 40, the distributionmechanism is installed in a storage unit 41, as is different from the transporting apparatus 30 shown in Fig. 1. In other words, the transporting apparatus 40 comprises the storage unit 41 used for temporarily storing the wet mixture, and a transporting unit 42 which transports the wet mixture, including a casing 43 having a supplying port 44 through which the wet mixture is charged and a belt conveyor 45.
Here, when the wet mixture prepared in the wet mixing machine (not shown) is charged into the transporting unit 42 through the supplying port 44, the wet mixture is accumulated on the belt conveyor 45 that constitutes the transporting unit 42. The belt conveyor 45, which is constituted by a conveyor belt 45a and rollers 46a and 46b, transports the wet mixture accumulated on the belt conveyor 45 toward the storage unit 41 continuously or intermittently, and charges the wet mixture into the storage unit 41. The storage unit 41 can temporarily store a fixed amount of the wet mixture, and can also charge the wet mixture into the next process, while controlling the amount thereof to a fixed amount per unit time.

The storage unit 41 is provided with a closing plate 47b capable of sliding laterally, and when this closing plate 47b is closed (state shown in Fig. 2), the inner space of the storage unit 41 can be divided into the upper and the lower parts.
Here, the lower part separated by the closing plate 47b of the storage unit 41 is provided with two discharging ports 41a and 41b on its bottom face, and a distribution mechanism, which allows only either one of the discharging ports to discharge the wet mixture, is installed therein.
In other words, a shaft member 47c is rotatably attached to a branch portion between the discharging port 41a side and the discharging port 41b side, and one side of a plate-shaped switching plate 47a is secured to the shaft member 47c so that the switching plate 47a can be shifted at a predetermined angle in association with the rotation of the shaft member 47c.

In the storage unit 41 of this kind, when the closing plate 47b is closed, the wet mixture, transported from the transporting unit 42, can be stored in the storage unit 41.
Moreover, in the case where the closing plate 47b is pulled out to be in an open state, the wet mixture can be transported to an apparatus used in the next process through the discharging port. Here, by placing the switching plate 47a at such a position (see Fig. 2) as to plug the discharging port 41a side, the wet mixture stored on the closing plate 47b can be transported to an apparatus used in the next process through the discharging port 41b. Moreover, in the case where the position of the switching plate 47a is shifted to such a position as to plug the discharging port 41b side, the stored wet mixture can be transported to an apparatus used in the next process through the discharging port 41a.
Therefore, in the storage unit 41, by closing the closing plate, the wet mixture can be temporarily stored, and by selecting which discharging port to be opened (closed) using the switching plate, the wet mixture can be distributed and transported to an apparatus used in the next process.
Here, in the storage unit 41, the switching plate 47a may be placed at a position that covers neither of the discharging ports so that the wet mixture may be simultaneously transported to an apparatus used in the next process through both of the discharging ports 41a and 41b.
Moreover, for example, a charging port of an extrusion-molding machine to be used in the next process is placed right below the discharging port 41a or 41b.

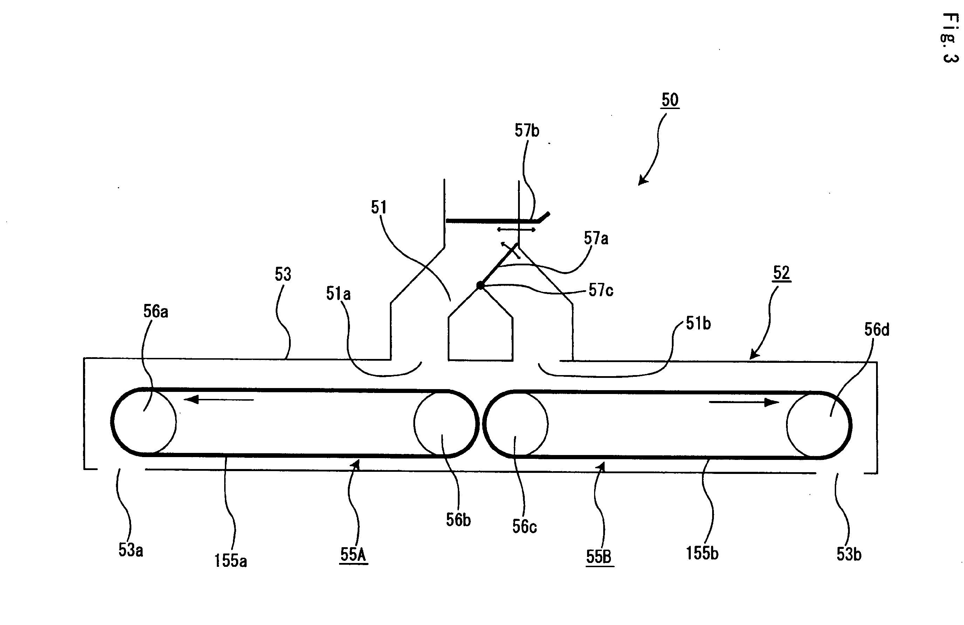

Fig. 3 is a cross-sectional view that schematically shows still another example of the transporting apparatus of the present invention.
A transporting apparatus 50 shown in Fig. 3 is a transporting apparatus provided with a transporting unit and a storage unit; however, this transporting apparatus 50 is different from the transporting apparatus 30 shown in Fig. 1 in that the storage unit is placed on the upper stream side from the transporting unit in the transporting path of the wet mixture.
In other words, the transporting apparatus 50 comprises a storage unit 51 used for temporarily storing the wet mixture, and a transporting unit 52 for transporting the wet mixture, which is constituted by a casing 53 and belt conveyors 55A and 55B, and a charging port formed on the upper face of the casing 53 is used for charging the wet mixture into the casing 53, is allowed to communicate with discharging ports 51a and 51b formed on the lower face of the storage unit 51.

The storage unit 51 is provided with a closing plate 57b capable of sliding laterally, and when this closing plate 57b is closed (state shown in Fig. 3), the inner space of the storage unit 51 can be divided into the upper and the lower parts.
Here, the lower section separated by the closing plate 57b of the storage unit 51 is provided with two discharging ports 51a and 51b on its bottom face, and a distribution mechanism, which allows only either one of the discharging ports to discharge the wet mixture, is installed therein.
In other words, a shaft member 57c is rotatably attached to a branch portion between the discharging port 51a side and the discharging port 51b side, and one side of a plate-shaped switching plate 57a is secured to the shaft member 57c so that the switching plate 57a can be shifted to a predetermined angle in association with the rotation of the shaft member 57c.

' Moreover, a belt conveyor 55A, including a conveyor belt 155a and rollers 56a and 56b, and a belt conveyor 55B including a conveyor belt 155b and rollers 56c and 56d, are placed inside the casing 53, and the respective belt conveyors are designed to transport the wet mixture toward the end sides of the casing 53.

Here, in the transporting apparatus 50, the wet mixture, prepared in the wet mixing machine (not shown), is charged into the storage unit 51, and the wet mixture is stored on the closing plate 57b, if necessary, and then charged into the casing 53 through the opened discharging port to be accumulated on the belt conveyor. In other words, in the case where the discharging port 51a of the storage unit 51 is open, the wet mixture is accumulated on the conveyor belt 155a, while, in the case where the discharging port 51b is open, the wet mixture is accumulated on the conveyor belt 155b.
Here, the mechanism used for storing the wet mixture in the storage unit 51 and the mechanism used for discharging either of the wet mixtures through the discharging port, that is, the storing mechanism and the distribution mechanism possessed by the storage unit 51, are the same as those mechanisms provided in the storage unit 41 shown in Fig. 2.
Therefore, the transporting apparatus 50 can temporarily store the wet mixture on the upstream side of the transporting unit.
Moreover, in the transporting apparatus 50, the storage unit 51 is provided with a distribution mechanism.

The wet mixtures, accumulated on the respective conveyor belts 155a and 155b, are transported toward predetermined directions by the belt conveyors, and then charged into the next process through the discharging ports 53a and 53b formed in the casing 53.
In this manner, the transporting apparatus of the present invention may have a storage unit on the upper stream side of the transporting unit.

Each of the transporting apparatuses that have been explained by reference to Figs. 1 to 3 is a transporting apparatus equipped with a storage unit on either the upstream side or the downstream side of the transporting unit; however, it is only necessary for the transporting apparatus of the present invention to include at least one transporting unit and one storage unit, and for example, storage units may be installed on both of the upstream side and the downstream side of the transporting unit.
Moreover, in the transporting apparatuses that have been explained by reference to Figs. 1 to 3, either the storage unit or the transporting unit is provided with a distribution mechanism; however, in the transporting apparatus of the present invention, both of the units may have distribution mechanisms.
Moreover, in the case where the transporting apparatus of the present invention has a distribution mechanism, the distribution ends are not limited to two places, and may be prepared as two or more places.

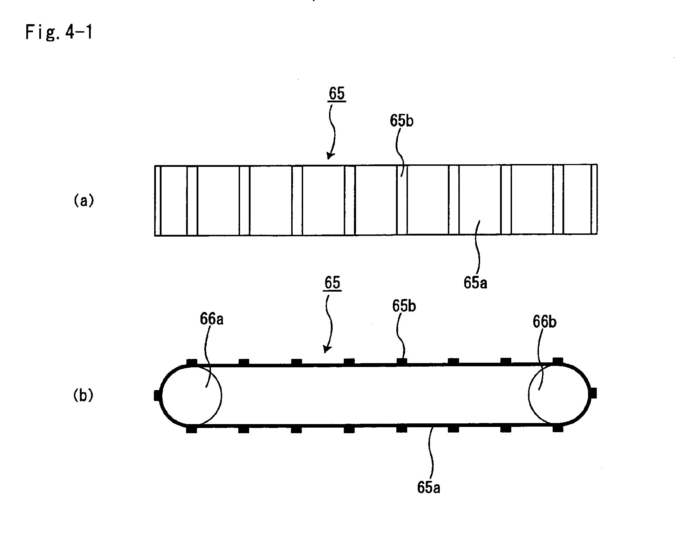

Furthermore, in the transporting apparatuses that have been explained by reference to Figs. 1 to 3, a belt conveyor using a flat belt is installed as the conveyor belt; however, the conveyor to be used in the transporting apparatus of the present invention is not limited thereto, and may be, for example, conveyors as shown in Figs. 4-1 and 4-2.
Each of Figs. 4-1(a) and 4-2(a) is a plan view that schematically shows another example of a conveyor constituting the transporting apparatus of the present invention, and each of Figs. 4-1(b) and 4-2(b) is a cross-sectional view of each of Figs. 4-1(a) and 4-2 (a) .
A conveyor 65, shown in Figs. 4-1 (a) and 4-1 (b) is equipped with a conveyor belt 65a with a bridge and rollers 66a and 66b, and the conveyor belt 65a with a bridge has a plate-shaped protruding member 65b that is placed virtually perpendicularly to the advancing direction of the belt. Here, although not shown in the Figures, the transporting unit constituted by the conveyor 65 may be of course equipped with a casing.

Moreover, a conveyor 75, shown in Figs. 4-2 (a) and 4-2 (b), is a chain conveyor with buckets, which is equipped with a chain with buckets 75a and rollers 76a and 76b, and a bucket 75b used for holding the wet mixture is secured on the surface of the chain with buckets 75a with predetermined intervals. Although not shown in the figures, the transporting unit, constituted by the conveyor 75, may of course have a casing.
The conveyors, shown in Figs. 4-1 and 4-2, may also be desirably used as the transporting unit constituting the transporting apparatus of the present invention.

With respect to the material for the conveyor belt, although not particularly limited, examples thereof include: rubber, urethane, vinyl chloride and resins such as fluororesin and silicone resin.
Moreover, in addition to the belt conveyor, the transporting apparatus of the present invention may use, for example, a chain conveyor, a pallet conveyor, a trolley conveyor, a flow conveyor, a flight conveyor, a disc conveyor, a power screw, a screw conveyor and the like as a conveyor constituting the transporting unit.

The following description will discuss a method for manufacturing a honeycomb structured body in accordance with the present invention.
The method for manufacturing a honeycomb structured body of the present invention comprises: carrying out a transporting process in which a wet mixture containing inorganic powders that have been wet-mixed is transported to an apparatus used in an extrusion-molding process, followed by manufacturing a pillar-shaped honeycomb molded body having a number of cells longitudinally placed in parallel with one another with a cell wall therebetween through extrusion molding, and firing the honeycomb molded body to manufacture a honeycomb structured body comprising a honeycomb fired body. In this method, a transporting apparatus, which comprises a storage unit for temporarily storing the wet mixture and a transporting unit equipped with a conveyor for transporting the wet mixture, is utilized in the transporting process so that the wet mixture is transported to an extrusion-molding machine.

The following description will discuss the method for manufacturing the honeycomb structured body of the present invention in the order of processes.
Here, the following description will discuss a method for manufacturing a honeycomb structured body by using silicon carbide powders as inorganic powders, with reference to an example of a method for manufacturing a honeycomb structured body which is mainly composed of silicon carbide as constituent material.
Of course, the main component of the constituent materials for the honeycomb structured body is not limited to silicon carbide, and other examples thereof include: nitride ceramic materials, such as aluminum nitride, silicon nitride, boron nitride and titanium nitride, carbide ceramic materials, such as zirconium carbide, titanium carbide, tantalum carbide and tungsten carbide, and oxide ceramic materials, such as alumina, zirconia, cordierite, mullite, and aluminum titanate.
Among these, non-oxide ceramic materials are desirably used, and in particular, silicon carbide is more desirably used. Silicon carbide is desirable because of its superior heat resistant characteristics, mechanical strength, thermal conductivity and the like. Here, materials, such as a silicon-containing ceramic material manufactured by blending metal silicon in the above-mentioned ceramic material and a ceramic material that is combined by silicon or a silicate compound, may also be used as the constituent materials, and among these, a material manufactured by blending silicon carbide with metal silicon (silicon-containing silicon carbide) is desirably used.

First, inorganic powders, such as silicon carbide powders having different average particle sizes, and an organic binder are dry-mixed to prepare a mixed powder, and a liquid-state plasticizer, a lubricant and water are mixed to prepare a mixed liquid, and the mixed powder and the mixed liquid are mixed by using a wet-mixing device so that a wet mixture for use in manufacturing a molded body is prepared.

With respect to the particle size of the silicon carbide powder, although not particularly limited, those which are less susceptible to shrinkage in the succeeding firing process are desirably used, and for example, a mixed powder, prepared by combining 100 parts by weight of powder having an average particle size of 0.3 to 50 µm with 5 to 65 parts by weight of powder having an average particle size of 0.1 to 1.0 µm, is desirably used.
In order to adjust the pore diameter and the like of the honeycomb fired body, it is necessary to adjust the firing temperature, and the pore diameter can be adjusted by adjusting the particle size of the inorganic powder.

With respect to the above-mentioned binder, although not particularly limited, examples thereof include: methylcellulose, carboxy methylcellulose, hydroxy ethylcellulose, polyethylene glycol and the like. Among these, methylcellulose is more desirably used.
In general, the compounding amount of the above-mentioned binder is desirably set to 1 to 10 parts by weight with respect to 100 parts by weight of the silicon carbide powder.

With respect to the above-mentioned plasticizer, although not particularly limited, for example, glycerin and the like may be used.
Moreover, with respect to the lubricant, although not particularly limited, for example, polyoxy alkylene-based compounds, such as polyoxyethylene alkyl ether and polyoxy propylene alkyl ether, may be used.
Specific examples of the lubricant include: polyoxyethylene monobutyl ether and polyoxypropylene monobutyl ether.
Here, the plasticizer and the lubricant are not necessarily contained in the mixed material powder depending on cases.

Upon preparing the wet mixture, a dispersant solution may be used, and with respect to the dispersant solution, examples thereof include: water, an organic solvent such as benzene, and an alcohol such as methanol.
Moreover, a molding auxiliary may be added to the wet mixture.
With respect to the molding auxiliary, although not particularly limited, examples thereof include: ethylene glycol, dextrin, fatty acid, fatty acid soap, polyalcohol and the like.

Furthermore, balloons that are fine hollow spheres comprising oxide-based ceramics and a pore forming agent such as spherical acrylic particles or graphite may be added to the above-mentioned material paste, if necessary.
With respect to the above-mentioned balloons, although not particularly limited, examples thereof include alumina balloons, glass micro-balloons, shirasu balloons, fly ash balloons (FA balloons), mullite balloons and the like may be used. Among these, alumina balloons are more desirably used.

Here, with respect to the wet mixture using silicon carbide powder prepared as described above, the temperature thereof is desirably set to 28°C or less. When the temperature is too high, the organic binder tends to be gelatinized.
Moreover, the rate of organic components in the wet mixture is desirably set to 10% by weight or less, and the content of moisture is desirably set from 8.0 to 20.0% by weight.

The wet mixture, which has been prepared, is then transported, and charged into a molding machine.
In the method for manufacturing a honeycomb structured body of the present invention, the transporting process of the wet mixture is carried out by a transporting apparatus that is equipped with a storage unit used for temporarily storing the wet mixture and a transporting unit for transporting the wet mixture.
More specifically, the transporting apparatus of the present invention that has been explained earlier can be used.

In the method for manufacturing a honeycomb structured body of the present invention, since the above-mentioned transporting apparatus is utilized, the prepared wet mixture is properly transported to an extrusion-molding machine in the succeeding process, and even when any trouble occurs in the next process and thereafter, which will be described later, causing the stoppage of the manufacturing line, the wet mixture can be temporality stored in the storage unit so that the preceding process of preparing the wet mixture can be operated without stopping.
In the transporting apparatus of the present invention to be used here, the storage unit is desirably designed to be able to store the wet mixture in the amount of 1.5 to 3 times (weight conversion) higher than the molding capability of the extrusion-molding machine.

Moreover, in the method for manufacturing the present invention, upon transporting the prepared wet mixture, it is desirable to store the wet mixture in the storage unit for a fixed period of time. This is desirable, because the moldability of the wet mixture is improved in the succeeding extrusion-molding process.
Although the reason for this has not been clarified, it is presumed that, since the wet mixture is refrigerated and aged, the organic binder is allowed to swell during these refrigerating and aging time so that the lubrication characteristics of the inorganic particles (silicon carbide particles) is improved.
In the case where the wet mixture is stored for a fixed period of time, although the storing time is not particularly limited, the lower limit of the storing time is desirably set to one hour, more desirably 4 hours, and the upper limit is desirably set to 10 hours, more desirably 8 hours.
In the case of the storing time of less than one hour, the moldability of the wet mixture is hardly improved; in contrast, in the case of the storing time exceeding 10 hours, the wet mixture tends to be partially dried to sometimes cause degradation in the moldability.
When the moldability of the wet mixture is improved, the molding pressure can be reduced at the time of extrusion molding, and by reducing the molding pressure, the rate of occurrence of defective molded products can be reduced, and in addition, the life of wear parts (metal die and the like) constituting the extrusion-molding machine can be prolonged.

After the wet mixture transported by the transporting apparatus has been charged into the extrusion-molding machine, it is extrusion-molded into a pillar-shaped honeycomb molded body having a number of cells longitudinally placed in parallel with one another with a cell wall therebetween.
In the present specification, the shape indicated by the word "pillar" refers to any desired shape of a pillar including a round pillar, an oval pillar, a polygonal pillar and the like.
Next, the resulting honeycomb molded body is dried by using a dryer, such as a microwave dryer, a hot-air dryer, a dielectric dryer, a reduced-pressure dryer, a vacuum dryer and a freeze dryer.
Next, depending on the needs, ends on the outlet side of a group of cells on the inlet side and ends on the inlet side of a group of cells on the outlet side are filled with a predetermined amount of plug material paste that is to form plugs so as to seal those cells.

With respect to the plug material paste, although not particularly limited, those plug material pastes that allow the plugs formed through post processes to have a porosity in a range from 30 to 75% are desirably used, and, for example, the same material as that of the wet mixture may be used.
Next, by carrying out a degreasing process (for example, at a temperature from 200 to 500°C) and a firing process (for example, at a temperature from 1400 to 2300°C) on the honeycomb molded body, which has the plug material paste filled therein and has been dried, under predetermined conditions, it is possible to manufacture a honeycomb fired body in which a plurality of cells are longitudinally placed in parallel with one another with a cell wall therebetween, and either one of ends of the cells is sealed.
With respect to the conditions for degreasing and firing the honeycomb molded body, conventional conditions that have been used upon manufacturing a filter comprising a porous ceramic material may be adopted.

Next, a sealing material paste to form a sealing material layer is applied onto a side face of the honeycomb fired body with an even thickness to form a sealing material paste layer, and a process of laminating another honeycomb fired body on the sealing material paste layer is successively repeated so that an aggregate body of honeycomb fired bodies having a predetermined size is manufactured.

With respect to the sealing material paste, for example, those comprising inorganic fibers and/or inorganic particles in addition to an inorganic binder and an organic binder may be used.
With respect to the inorganic binder, for example, silica sol, alumina sol and the like may be used. Each of these may be used alone or two or more kinds of these may be used in combination. Among the inorganic binders, silica sol is more desirably used.

With respect to the organic binder, examples thereof include polyvinyl alcohol, methyl cellulose, ethyl cellulose, carboxymethyl cellulose, and the like. Each of these may be used alone or two or more kinds of these may be used in combination. Among the organic binders, carboxymethyl cellulose is more desirably used.

With respect to the inorganic fibers, examples thereof include ceramic fibers, such as silica-alumina, mullite, alumina and silica, and the like. Each of these may be used alone or two or more kinds of these may be used in combination. Among the inorganic fibers, alumina fibers are more desirably used.

With respect to the inorganic particles, examples thereof include carbides and nitrides, and specific examples include inorganic powder comprising silicon carbide, silicon nitride and boron nitride, and the like. Each of these may be used alone, or two or more kinds of these may be used in combination. Among the inorganic particles, silicon carbide having superior thermal conductivity is desirably used.

Moreover, balloons that are fine hollow spheres comprising oxide-based ceramics and a pore forming agent such as spherical acrylic particles or graphite may be added to the above-mentioned sealing material paste, if necessary.
With respect to the above-mentioned balloons, although not particularly limited, examples thereof include alumina balloons, glass micro-balloons, shirasu balloons, fly ash balloons (FA balloons) and mullite balloons may be used. Among these, alumina balloons are more desirably used.

This aggregate body of honeycomb fired bodies is heated so that the sealing material paste layers are dried and solidified to form sealing material layers (adhesive layers).
Next, a cutting process by using a diamond cutter or the like is carried out on the aggregate body of honeycomb fired bodies in which a plurality of honeycomb fired bodies are bonded to one another by interposing a sealing material layer (adhesive layers) so that a cylindrical-shaped ceramic block is manufactured.

Then, a sealing material layer is formed on the outer circumference of the ceramic block by using the above-mentioned sealing material paste so that a honeycomb structured body, in which a plurality of honeycomb fired bodies are bound to one another by interposing a sealing material layer (adhesive layers), with a sealing material layer (coat layer) being formed on the outer circumference of a cylindrical-shaped ceramic, can be manufactured.

Thereafter, a catalyst is supported on the honeycomb structured body on demand. The supporting process of the catalyst may be carried out on the honeycomb structural bodies prior to being manufactured into an aggregate body.
In the case where a catalyst is supported thereon, desirably, an alumina film having a high specific surface area is formed on the surface of the honeycomb structured body, and a co-catalyst and a catalyst such as platinum are applied to the surface of this alumina film.

Examples of the method for forming the alumina film on the surface of the honeycomb structured body include a method in which the honeycomb structured body is impregnated with a solution of a metal compound containing aluminum such as Al (NO₃)₃ and then heated, and a method in which the honeycomb structured body is impregnated with a solution containing alumina powder and then heated, and the like.
With respect to the method for applying a co-catalyst to the alumina film, for example, a method in which the honeycomb structured body is impregnated with a solution of a metal compound containing a rare-earth element, such as Ce (NO₃)₃, and then heated is proposed.
Examples of the method for applying a catalyst to the alumina film include: a method in which the ceramic fired body is impregnated with a nitric acid solution of diamine dinitro platinum ([Pt(NH₃)₂(NO₂)₂]HNO₃: 4.53% by weight in platinum concentration) or the like and then heated, and the like.
Moreover, the catalyst may be applied in such a manner that a catalyst is preliminarily applied to alumina particles and the honeycomb structured body is impregnated with a solution containing the alumina powder to which the catalyst has been applied, and then heated.

The method for manufacturing the honeycomb structured body described above relates to a honeycomb structured body (hereinafter, referred to as aggregated honeycomb structured body) having a structure in which a plurality of honeycomb fired bodies are bonded to one another by interposing a sealing material layer (adhesive layer); however, the honeycomb structured body to be manufactured by the method for manufacturing the present invention may be a honeycomb structured body in which a cylindrical-shaped ceramic block is constituted by a single honeycomb fired body (hereinafter, referred to as integral honeycomb structured body).

For manufacturing the integral honeycomb structured body of this kind, first, a honeycomb molded body is manufactured by using the same method as that used for manufacturing the aggregated honeycomb structured body, except that the size of the honeycomb molded body to be formed through extrusion-molding is larger in comparison with that of the aggregated honeycomb structured body.
Here, the method for transporting, storing and the like of the wet mixture prior to the molding process are the same as those methods used for the aggregated honeycomb structured body; therefore, the description thereof will be omitted.

In the same manner as the method for manufacturing the aggregated honeycomb structured body, the honeycomb molded body is dried by using a dryer, such as a microwave dryer, a hot-air dryer, a dielectric dryer, a reduced-pressure dryer, a vacuum dryer and a freeze dryer to form a ceramic dried body.
Next, depending on the needs, ends on the outlet side of a group of cells on the inlet side and ends on the inlet side of a group of cells on the outlet side are filled with a predetermined amount of plug material paste that is to form plugs so as to seal those cells.
Thereafter, in the same manner as the manufacturing processes of the aggregated honeycomb structured body, the degreasing and firing processes are carried out to manufacture a ceramic block, and by forming a sealing material layer (coat layer), if necessary, an integral honeycomb structured body can be manufactured. Moreover, a catalyst may be supported on the integral honeycomb structured body by using the same method.

In accordance with the method for manufacturing a honeycomb structured body of the present invention as explained above, it is possible to manufacture a honeycomb structured body with a high operating efficiency.
Moreover, upon manufacturing a honeycomb structured body through the above-mentioned method, a sequence of manufacturing processes may be carried out through a single production line; however, for example, the processes up to the process of charging the wet mixture by using a transporting apparatus equipped with a distribution mechanism may be carried out through a single production line, and the process of manufacturing a molded body by using an extrusion-molding machine and processes thereafter may be carried out through two or more production lines.
In this case, the distribution mechanism, placed in the transporting apparatus, is allowed to distribute and supply the wet mixture timely to the respective production lines.
In this specification, description has so far been made mainly with respect to a method for manufacturing a honeycomb structured body in which either one of the ends of each cell is sealed so that it can be used as a honeycomb filter, and a transporting apparatus usable in this manufacturing method. In addition, the transporting apparatus and the method for manufacturing a honeycomb structured body can be preferably used for the manufacture of a honeycomb structured body which can be used as a catalyst supporting carrier, i.e., a honeycomb structured body in which ends of cells are not sealed.

### EXAMPLES

With respect to the method for manufacturing a honeycomb structured body using the transporting apparatus of the present invention, in the case where a wet mixture had been stored in the transporting apparatus for a fixed period of time, and then a molded body of a predetermined shape was manufactured by using an extrusion-molding machine, the relationship between the storing period of time in the transporting apparatus (storage unit) and the molding pressure (MPa) was evaluated.
Here, in the respective examples, the molding rate was set to 4000 mm/min, and the molding pressure was adjusted so that the honeycomb molded body could be formed at this molding rate.

### (Example 1)

Powder of α-type silicon carbide having an average particle size of 10 µm (250 kg), powder of α-type silicon carbide having an average particle size of 0.5 µm (100 kg) and an organic binder (methylcellulose) (20 kg) were mixed to prepare a mixed powder.
Next, separately, a lubricant (UNILUB, made by NOF Corp.) (12 kg), a plasticizer (glycerin) (5 kg) and water (65 kg) were mixed to prepare a liquid mixture, and this liquid mixture and the mixed powder were mixed by using a wet mixer to prepare a wet mixture.
The moisture content of the wet mixture thus prepared was 14% by weight.

Next, this wet mixture was transported to an extrusion-molding machine by using the transporting apparatus of the present invention shown in Fig. 1. Although the transporting apparatus shown in Fig. 1 was equipped with a distribution mechanism, the distribution mechanism was not used in this example, and the wet mixture, charged through a charging port 34, was transported to a storage unit 31A via a belt conveyor.
Thereafter, the wet mixture was stored in the storage unit 31A for one hour, and this was then charged into a material charging port of the extrusion-molding machine placed right under the storage unit 31A.
Here, the moisture content of the wet mixture immediately before the charging into the extrusion-molding machine was 13.5% by weight.
The wet mixture was then extrusion-molded into a molded body having a shape shown in Fig. 6. The molding pressure in this example was 9.0 MPa.

Next, after the raw molded body had been dried by using a microwave dryer or the like, predetermined cells were filled with a plug material paste having the same composition as the wet mixture.
After having been again dried by using a dryer, the resulting product was degreased at 400°C, and fired at 2200°C in a normal-pressure argon atmosphere for 3 hours to manufacture a honeycomb fired body comprising a silicon carbide sintered body with a porosity of 42%, an average pore diameter of 12.5 µm, a size of 34.3 mm 34.3 mm × 150 mm, the number of cells (cell density) of 46.5/cm² and a thickness of each cell wall of 0.20 mm.

By using a heat resistant sealing material paste containing 30% by weight of alumina fibers having an average fiber length of 20 µm, 21% by weight of silicon carbide particles having an average particle size of 0.6 µm, 15% by weight of silica sol, 5.6% by weight of carboxymethyl cellulose and 28.4% by weight of water, a large number of the honeycomb fired bodies were bonded to one another, and then dried at 120°C and cut by using a diamond cutter to manufacture a cylindrical-shaped ceramic block with a sealing material layer (adhesive layer) having a thickness of 1 mm.

Next, silica-alumina fibers (average fiber length: 100 µm, average fiber diameter: 10 µm) (23.3% by weight) serving as inorganic fibers, silicon carbide powder having an average particle size of 0.3 µm (30.2% by weight) serving as inorganic particles, silica sol (content of SiO₂ in sol: 30% by weight) (7% by weight) serving as an inorganic binder, carboxymethyl cellulose (0.5% by weight) serving as an organic binder and water (39% by weight) were mixed, and kneaded to prepare a sealing material paste.

Thereafter, by using the above-mentioned sealing material paste, a sealing material paste layer having a thickness of 0.2 mm was formed on the outer circumference of the ceramic block. This sealing material paste layer was then dried at 120°C so that a honeycomb structured body 10 having a cylindrical shape (143.8 mm in diameter × 150 mm in length) with a sealing material layer (coat layer) formed on the outer circumference was manufactured.

### (Examples 2 to 4)

By using the same method as Example 1 except that the storing time in the transporting apparatus (storage unit) was set to the period of time shown in Table 1, a honeycomb structured body was manufactured.
In each of the examples, each of molding pressures (MPa) also shown in Table 1 was required upon extrusion molding.

### (Reference Examples 1, 2)

By using the same method as Example 1 except that the storing time in the transporting apparatus (storage unit) was set to the period of time shown in Table 1, a honeycomb structured body was manufactured.
In each of the Reference Examples, each of molding pressures (MPa) also shown in Table 1 was required upon extrusion molding.

**Table 1**

| | Storing time (hr) | Molding pressure (MPa) |
|---|---|---|
| Example 1 | 1 | 9.0 |
| Example 2 | 4 | 6.0 |
| Example 3 | 8 | 7.0 |
| Example 4 | 10 | 8.5 |
| Reference Example 1 | 0 | 10.0 |
| Reference Example 2 | 12 | 11.0 |

As clearly indicated by the results shown in Table 1, by storing the wet mixture in the transporting apparatus (storage unit) for 1 to 10 hours prior to conducting the extrusion molding, it becomes possible to reduce the molding pressure.
Moreover, in particular, by setting the storing time to 4 to 8 hours, the molding pressure can be further reduced to 7 MPa or less.
In this manner, by reducing the molding pressure upon extrusion molding, it becomes possible to reduce the rate of occurrence of defective molded products, and it also becomes possible to make the extrusion-molding metal mold hardly wear, and consequently to prolong the life of the metal die.

In contrast, in the case where the wet mixture was not stored in the transporting apparatus (storage unit) temporarily as indicated by Reference Example 1, as well as in the case where the wet mixture was stored for a long period of time, such as 10 hours or more, as indicated by Reference Example 2, it was necessary to use a greater molding pressure (10 MPa or more) upon extrusion molding.
Moreover, it was revealed from those results that the desirable period of time for temporarily storing the wet mixture in the transporting apparatus was set in a range from 1 to 10 hours.

The reason that those results were obtained from the above-mentioned Examples and Reference Examples is presumably because, when the wet mixture was stored in the transporting apparatus (storage unit) for a fixed period of time as shown in the Examples, the wet mixture was refrigerated and aged so that these refrigerating and aging processes allowed methylcellulose to swell, thereby improving the lubrication characteristics among silicon carbide particles.
However, when the storing time is too long as in the case of Reference Example 2, it is presumed that the wet mixture is partially dried to cause a reduction in the moldability, and as a result, the molding pressure is increased.

### BRIEF DESCRIPTION OF THE DRAWINGS

Fig. 1 is a cross-sectional view that schematically shows one example of a transporting apparatus in accordance with the present invention.
Fig. 2(a) is a cross-sectional view that schematically shows another example of the transporting apparatus in accordance with the present invention; and Fig. 2 (b) is a bottom face view of a storage unit constituting the transporting apparatus shown in Fig. 2(a).
Fig. 3 is a cross-sectional view that schematically shows another example of the transporting apparatus of the present invention.
Fig. 4-1 (a) is a plan view that schematically shows one example of a conveyor which forms one component of the transporting apparatus of the present invention, and Fig. 4-1 (b) is a cross-sectional view of Fig. 4-1(a).
Fig. 4-2 (a) is a plan view that schematically shows another example of the conveyor constituting the transporting apparatus of the present invention, and Fig. 4-2 (b) is a cross-sectional view of Fig. 4-2 (a) .
Fig. 5 is a perspective view that schematically shows one example of a ceramic filter.
Fig. 6 (a) is a perspective view that schematically shows a honeycomb fired body constituting the ceramic filter shown in Fig. 5, and Fig. 6(b) is a cross-sectional view taken along line A-A of Fig. 6(a).

### EXPLANATION OF SYMBOLS

30, 40, 50 Transporting apparatus
31A, 31B, 41, 51 Storage unit
32, 42, 52 Transporting unit
33, 43, 53 Casing
34, 44 Supplying port
35, 45, 55a, 55b Belt conveyor
47a, 57a Switching plate
47b, 57b Closing plate

## Claims

1. A transporting apparatus comprising:
a storage unit for temporarily storing a wet mixture; and
a transporting unit equipped with a conveyor for transporting said wet mixture.

2. The transporting apparatus according to claim 1, further comprising:
a distribution mechanism for distributing said wet mixture to different transporting ends.

3. The transporting apparatus according to claim 2, wherein
said distribution mechanism is installed in said storage unit and/or said transporting unit.

4. The transporting apparatus according to any of claims 1 to 3, wherein
said transporting unit is constituted by a casing and a belt conveyor installed in said casing.

5. A method for manufacturing a honeycomb structured body, comprising:
carrying out a transporting process in which a wet mixture containing inorganic powders that have been wet-mixed is transported to an apparatus used in an extrusion-molding process; followed by
manufacturing a pillar-shaped honeycomb molded body having a number of cells longitudinally placed in parallel with one another with a cell wall therebetween through extrusion molding; and
firing said honeycomb molded body to manufacture a honeycomb structured body comprising a honeycomb fired body,
wherein
a transporting apparatus, which comprises a storage unit for temporarily storing the wet mixture and a transporting unit equipped with a conveyor for transporting said wet mixture, is utilized in said transporting process so that said wet mixture is transported to an extrusion-molding machine.

6. The method for manufacturing a honeycomb structured body according to claim 5,
wherein
said transporting apparatus comprises a distribution mechanism for distributing said wet mixture to apparatuses used in different extrusion-molding processes.

7. The method for manufacturing a honeycomb structured body according to claim 6,
wherein
said distribution mechanism is installed in said storage unit and/or said transporting unit.

8. The method for manufacturing a honeycomb structured body according to any of claims 5 to 7,
wherein
said transporting unit is constituted by a casing and a belt conveyor installed in said casing.
